# EUROPEAN PATENT APPLICATION

(11) **EP 4 815 156 A1**
(43) Date of publication of application: **30.09.2026**
(21) Application number: 24893036.4
(22) Date of filing: 26.09.2024
(51) Int. Cl.: H01M 50/342, H01M 50/103, H01M 50/15, H01M 10/04, H01M 10/052

(54) **BATTERY CELL CASING, PRESSURE RELIEF MECHANISM OF BATTERY CELL, BATTERY CELL, AND ELECTRICAL APPARATUS**

(30) Priority: 23.11.2023 CN 202311580556
(71) Applicant: Ningde Amperex Technology Limited, Ningde, Fujian 352100 (CN)
(72) Inventor: ZHANG, Guowen, Ningde, Fujian 352100 (CN); CHEN, Mingqi, Ningde, Fujian 352100 (CN)
(74) Representative: Kraus & Lederer PartGmbB
(86) International application number: PCT/CN2024/121506
(87) International publication number: WO 2025/107877

(57) **Abstract**

A battery cell casing, a pressure relief mechanism (2) for a battery cell, a battery cell (10), and an electrical apparatus are provided. The battery cell casing includes a shell (1) and a pressure relief mechanism (2), where the shell (1) is provided with a through-hole (20), the pressure relief mechanism (2) is disposed at the through-hole (20), and the pressure relief mechanism (2) includes an adhesive film (21) and a cover sheet (22). The cover sheet (22) is bonded to the shell (1) via the adhesive film (21) and covers the through-hole (20), and the adhesive film (21) is capable of melting under heat to form a pressure relief passage connecting the interior and exterior of the shell (1). A bonding area between the cover sheet (22) and the shell (1) is A, a cross-sectional area of the through-hole (20) covered by the cover sheet (22) is B, and $1.778 \leq \frac{A}{B} \leq 16.361$ . In the above structure, by limiting a ratio range of the bonding area A between the cover sheet (22) and the shell (1) to the cross-sectional area B of the pressure relief passage covered by the cover sheet (22), when an internal pressure of the battery cell (10) reaches a preset value, the cover sheet (22) can detach in a timely manner to form the pressure relief passage, thereby timely releasing the internal pressure of the battery cell (10), so that the battery cell (10) can exhibit good reliability while achieving overheating pressure relief .

## Description

This application claims priority to Chinese Patent Application No. 202311580556.8, filed with the China National Intellectual Property Administration on November 23, 2023 and entitled "BATTERY CELL CASING, PRESSURE RELIEF MECHANISM FOR BATTERY CELL, BATTERY CELL, AND ELECTRICAL APPARATUS", which is incorporated herein by reference in its entirety.

### TECHNICAL FIELD

This application relates to the field of batteries, and in particular, to a battery cell casing, a pressure relief mechanism for a battery cell, a battery cell, and an electrical apparatus.

### BACKGROUND

Rechargeable batteries, which may be referred to as secondary batteries, refer to batteries that can be charged after being discharged to activate active substances for continuous use. Rechargeable batteries are widely used in electronic devices such as mobile phones, notebook computers, electric bicycles, electric cars, electric airplanes, electric ships, electric toy cars, electric toy ships, electric toy airplanes, and electric tools.

At present, a groove is typically provided on a shell cover of a battery cell to relieve pressure when an internal gas pressure of the battery cell becomes excessively high. However, the thermal sensitivity of the groove in this solution is poor, resulting in poor reliability of pressure relief. How to improve the reliability of battery cell pressure relief has been a concern for those skilled in the art.

### SUMMARY

This application provides a battery cell casing, a pressure relief mechanism for a battery cell, a battery cell, and an electrical apparatus, where the battery cell casing can improve the reliability of pressure relief of the battery cell.

According to a first aspect, this application provides a battery cell casing. The battery cell casing includes a shell and a pressure relief mechanism, where the shell is provided with a through-hole; the pressure relief mechanism is disposed at the through-hole; the pressure relief mechanism includes an adhesive film and a cover sheet; the cover sheet is bonded to the shell via the adhesive film and covers the through-hole; and the adhesive film is capable of melting under heat to form a pressure relief passage connecting the interior and exterior of the shell. A bonding area between the cover sheet and the shell is A, a cross-sectional area of the through-hole covered by the cover sheet is B, and $1.778 \leq \frac{A}{B} \leq 16.361$.

Since the bonding force between the cover sheet and the shell is proportional to the bonding area A between the cover sheet and the shell, and the pressure exerted on the cover sheet by a pressure relief substance inside the shell through the through-hole is proportional to the cross-sectional area B of the through-hole covered by the cover sheet, when the pressure exerted on the cover sheet by the pressure relief substance inside the shell exceeds the bonding force between the cover sheet and the shell, the cover sheet detaches or even falls off from the through-hole. By setting a ratio of the bonding area A between the cover sheet and the shell to the cross-sectional area B of the through-hole covered by the cover sheet within a reasonable range, when an internal pressure of the battery cell reaches a preset value, the pressure exerted on the cover sheet by the pressure relief substance inside the shell can exceed the bonding force between the cover sheet and the shell, allowing the cover sheet to fall off in a timely manner to form a pressure relief passage, thereby timely releasing the internal pressure of the battery cell, so that the battery cell can exhibit good reliability while achieving overheating pressure relief.

According to the battery cell casing provided by some embodiments of this application, the shell includes a side wall, and the through-hole includes a first through-hole provided on the side wall, so that the first through-hole on the side wall can serve as a through-hole in the shell for venting substance, and the cover sheet is bonded to the side wall via the adhesive film and covers the first through-hole, thereby sealing the first through-hole, so that the battery cell can be isolated from the exterior under normal operating conditions. In the case of mechanical abuse, the adhesive film can melt under heat, reducing the bonding force provided; and the cover sheet can detach or even fall off from the side wall under the action of the internal pressure of the battery cell, so that the first through-hole forms a pressure relief passage connecting the interior and exterior of the shell, and substances inside the shell are released from the interior to the exterior along the pressure relief passage formed by the first through-hole.

According to the battery cell casing provided by some embodiments of this application, the shell further includes an adapting member provided on an outer side of the side wall, the through-hole further includes a second through-hole provided on the adapting member, the second through-hole is in communication with the first through-hole, and the cover sheet is bonded to a side of the adapting member away from the side wall via the adhesive film and covers the second through-hole. By connecting two sides of the adapting member in a thickness direction to the side wall and the cover sheet respectively, the adapting member has larger side surfaces for connection with the side wall and the cover sheet, which helps to improve the firmness of the connection between the adapting member and the side wall as well as the cover sheet. At this time, A is a bonding area between the cover sheet and the adapting member, and B is a cross-sectional area of the second through-hole covered by the cover sheet.

According to the battery cell casing provided by some embodiments of this application, along an axial direction of the second through-hole, a projection of the second through-hole is located within a projection range of the first through-hole, so that a cross-sectional area of the first through-hole is greater than or equal to a cross-sectional area of the second through-hole, allowing the pressure relief substance inside the shell to flow smoothly along an arrangement direction of the first through-hole and the second through-hole. In addition, by setting the cross-sectional area of the second through-hole to be less than the cross-sectional area of the first through-hole, when the cover sheet covers the second through-hole, a larger bonding area with the adapting member can be obtained, which is conducive to improving the reliability of the connection between the cover sheet and the adapting member.

According to the battery cell casing provided by some embodiments of this application, a first direction is perpendicular to a second direction, and both the first direction and the second direction are perpendicular to an axial direction of the first through-hole; a length of the first through-hole in the first direction is greater than a length of the first through-hole in the second direction; and/or a length of the second through-hole in the first direction is greater than a length of the second through-hole in the second direction, so that part of the pressure relief passage can be enlarged in the first direction, which can improve the pressure relief capacity of the pressure relief passage.

According to the battery cell casing provided by some embodiments of this application, a length of the side wall in the first direction is D, a length of the side wall in the second direction is E, and 10 mm ≤ D ≤ 100 mm, so that the battery cell can be within a reasonable size range while also limiting the length of the first through-hole in the first direction; and 1 mm ≤ E ≤ 20 mm is satisfied, so that the battery cell can be within a reasonable size range while also limiting the length of the first through-hole in the second direction.

According to the battery cell casing provided by some embodiments of this application, the length of the first through-hole in the second direction is L1, and 1 mm ≤ L1 ≤ 6 mm, so that the length of the first through-hole in the second direction can match the length of the side wall in the second direction, making it less likely for the first through-hole to affect the structural strength of the side wall, which is conducive to maintaining the structural strength of the battery cell. The length of the second through-hole in the second direction is L2, and 0.2 mm ≤ L2 ≤ 5 mm, so that the length of the second through-hole in the second direction can match the length of the side wall in the second direction and the length of the first through-hole in the second direction, making it less likely for the second through-hole to affect the structural strength of the adapting member, which is conducive to maintaining the structural strength of the battery cell; and/or the length of the first through-hole in the first direction is L3, and 1 mm ≤ L3 ≤ 6 mm, so that the length of the first through-hole in the first direction does not affect the structural strength of the side wall due to being too long, and the cross-sectional area of the first through-hole is not reduced due to being too short, so that the discharge capacity of the first through-hole is not easily affected. The length of the second through-hole in the first direction is L4, 0.2 mm ≤ L4 ≤ 5 mm, so that the length of the second through-hole in the first direction does not affect the structural strength of the adapting member due to being too long, and the cross-sectional area of the second through-hole is not reduced due to being too short, so that the discharge capacity of the second through-hole is not easily affected.

According to the battery cell casing provided by some embodiments of this application, the first through-hole is configured as a runway-shaped hole, so that the first through-hole can increase the cross-sectional area by extending the length in the second direction, which is conducive to improving the capacity of the first through-hole to pass pressure relief substances; and/or the second through-hole is configured as a runway-shaped hole, so that the second through-hole can increase the cross-sectional area by extending the length in the second direction, which is conducive to improving the capacity of the second through-hole to pass pressure relief substances.

According to the battery cell casing provided by some embodiments of this application, a projection of a bonding region between the cover sheet and the adapting member along the axial direction of the first through-hole is a first projection, a width of the first projection in a radial direction of the first through-hole is C, and 0.6 mm ≤ C ≤ 0.95 mm, which not only enables the bonding region between the cover sheet and the adapting member to provide sufficient bonding force for the cover sheet, mitigating the risk of the cover sheet falling off under normal operating conditions of the battery cell, but also allows the cover sheet to fall off from the adapting member in a timely manner under thermal runaway conditions, facilitating timely discharge of venting substance.

According to the battery cell casing provided by some embodiments of this application, $2.968 \leq \frac{A}{B} \leq 8.776$. By setting a ratio of the bonding area A between the cover sheet and the shell to the cross-sectional area B of the through-hole covered by the cover sheet within the above range, an internal pressure of the battery cell can be further released. This allows the battery cell to achieve thermal runaway pressure relief while also exhibiting good reliability.

According to the battery cell casing provided by some embodiments of this application, 0.28 mm² ≤ B ≤ 4.524 mm², so that the cover sheet can be subjected to the pressure inside the shell in a reliable manner and is not prone to falling off under normal operating conditions due to excessive internal pressure from the shell, which is conducive to improving the reliability of the pressure relief mechanism.

According to the battery cell casing provided by some embodiments of this application, 3.581 mm² ≤ A ≤ 8.042 mm², which not only enables the cover sheet to fall off smoothly from the adapting member under thermal runaway conditions, but also allows the cover sheet to be firmly connected to the adapting member under normal operating conditions.

According to the battery cell casing provided by some embodiments of this application, a melting point of the adhesive film is T1, 110°C ≤ T1 ≤ 130°C, so that the adhesive film exhibits good thermal sensitivity under thermal runaway conditions and does not melt under normal operating conditions.

According to the battery cell casing provided by some embodiments of this application, the adhesive film includes a first sub-film and a second sub-film stacked along the axial direction of the first through-hole, the first sub-film is located between the second sub-film and the cover sheet, and a melting point of the second sub-film is lower than a melting point of the first sub-film, so that when the adhesive film is heated, the second sub-film is more likely to melt, making the cover sheet more likely to fall off due to the melting of the second sub-film, which is conducive to improving the sensitivity of pressure relief of the pressure relief mechanism.

According to the battery cell casing provided by some embodiments of this application, the melting point of the second sub-film is T2, and 100°C ≤ T2 ≤ 120°C is satisfied, so that the second sub-film is more likely to melt under thermal runaway conditions, allowing the cover sheet to detach smoothly.

According to the battery cell casing provided by some embodiments of this application, the adhesive film further includes a third sub-film located between the first sub-film and the second sub-film, and a melting point of the third sub-film is higher than the melting point of the first sub-film and the melting point of the second sub-film, so that the third sub-film can provide good support for the overall adhesive film, which is conducive to improving the overall strength of the adhesive film.

According to the battery cell casing provided by some embodiments of this application, the melting point of the third sub-film is T3, and 130°C ≤ T3 ≤ 150°C, so that the third sub-film is less likely to melt relative to the first sub-film and the second sub-film. This can provide good overall support for the adhesive film, reducing the possibility of the adhesive film melting under normal operating conditions.

According to the battery cell casing provided by some embodiments of this application, the adhesive film includes polypropylene.

According to the battery cell casing provided by some embodiments of this application, a thickness of the adhesive film in the axial direction of the first through-hole is H, and 10 µm ≤ H ≤ 48 µm, so that the adhesive film has sufficient structural strength without causing material waste due to excessive thickness.

According to the battery cell casing provided by some embodiments of this application, a bonding strength of the adhesive film is P, and $0.08 MPa \leq \frac{A}{B} ⋅ P \leq 2 MPa$, so that the adhesive film can provide sufficient force for the cover sheet to seal the pressure relief passage, making the cover sheet less likely to fall off under normal operating conditions, while when the internal pressure of the shell becomes excessive, the internal pressure of the shell overcomes the bonding effect of the adhesive film to cause the cover sheet to fall off, achieving pressure relief.

According to the battery cell casing provided by some embodiments of this application, the first through-hole is a liquid injection hole. By reusing the liquid injection hole as the first through-hole for pressure relief, the preparation process of the battery cell can be further simplified, which is conducive to reducing hole-punching steps and lowering the preparation cost of the battery cell.

According to a second aspect, some embodiments of this application provide a pressure relief mechanism for a battery cell. The pressure relief mechanism includes a cover sheet, an adhesive film, and an adapting member; the adapting member is provided with a second through-hole; the second through-hole is configured to connect to an interior of a shell of the battery cell; the cover sheet is bonded to the adapting member via the adhesive film and covers the second through-hole; and the adhesive film is capable of melting under heat to form a pressure relief passage connecting the interior and exterior of the shell. A bonding area between the cover sheet and the adapting member is F, a cross-sectional area of the second through-hole covered by the cover sheet is G, and $1.778 \leq \frac{F}{G} \leq 16.361$.

Since the bonding force between the cover sheet and the adapting member is proportional to the bonding area F between the cover sheet and the adapting member, and the pressure exerted on the cover sheet by the pressure relief substance inside the shell through the second through-hole is proportional to the cross-sectional area G of the second through-hole covered by the cover sheet, when the pressure exerted on the cover sheet by the pressure relief substance inside the shell exceeds the bonding force between the cover sheet and the adapting member, the cover sheet falls off from the second through-hole. By setting a ratio of the bonding area F between the cover sheet and the adapting member to the cross-sectional area G of the second through-hole covered by the cover sheet within a reasonable range, when the internal pressure of the battery cell reaches a preset value, the pressure exerted on the cover sheet by the pressure relief substance inside the shell can exceed the bonding force between the cover sheet and the adapting member, allowing the cover sheet to fall off in a timely manner to form a pressure relief passage, thereby timely releasing the internal pressure of the battery cell, so that the pressure relief mechanism for the battery cell can exhibit good reliability while achieving overheating pressure relief.

According to a third aspect, some embodiments of this application provide a battery cell, where the battery cell includes the battery cell casing provided by any of the above technical solutions.

According to a fourth aspect, some embodiments of this application provide an electrical apparatus, where the electrical apparatus includes the battery cell provided by any of the above technical solutions, and the battery cell is configured to provide electrical energy. Since the electrical apparatus includes the battery cell provided by the above technical solutions, the electrical apparatus exhibits good reliability.

The technical solutions provided by some embodiments of this disclosure at least bring the following beneficial effects:

This application provides a battery cell casing. The battery cell casing includes a shell and a pressure relief mechanism, where the shell is provided with a through-hole; the pressure relief mechanism is disposed at the through-hole; the pressure relief mechanism includes an adhesive film and a cover sheet; the cover sheet is bonded to the shell via the adhesive film and covers the through-hole; and the adhesive film is capable of melting under heat to form a pressure relief passage connecting the interior and exterior of the shell. A bonding area between the cover sheet and the shell is A, a cross-sectional area of the through-hole covered by the cover sheet is B, and $1.778 \leq \frac{A}{B} \leq 16.361$. 16.361. In the above structure, by limiting a ratio range of the bonding area A between the cover sheet and the shell to the cross-sectional area B of the through-hole covered by the cover sheet, when an internal pressure of the battery cell reaches a preset value, the cover sheet can fall off in a timely manner to form a pressure relief passage, thereby timely releasing the internal pressure of the battery cell, so that the battery cell can exhibit good reliability while achieving overheating pressure relief.

### BRIEF DESCRIPTION OF DRAWINGS

The following describes features, advantages, and technical effects of the example embodiments of this application with reference to the accompanying drawings.
FIG. 1 is a schematic structural diagram of a battery cell according to an embodiment of this application;
FIG. 2 is a schematic disassembled view of a battery cell according to an embodiment of this application;
FIG. 3 is a schematic disassembled view of a battery cell according to another embodiment of this application;
FIG. 4 is a cross-sectional view along line A-A in FIG. 1;
FIG. 5 is a schematic disassembled view of a battery cell according to yet another embodiment of this application;
FIG. 6 is an enlarged view at an adhesive film according to an embodiment of this application;
FIG. 7 is an enlarged view at an adhesive film according to another embodiment of this application;
FIG. 8 is an enlarged view at an adhesive film according to yet another embodiment of this application;
FIG. 9 is a disassembled view of a pressure relief mechanism for a battery cell according to an embodiment of this application; and
FIG. 10 is a cross-sectional view of a pressure relief mechanism for a battery cell according to an embodiment of this application.

In the drawings:
1. shell; 11. first through-hole; 12. adapting member; 121. second through-hole; 13. side wall; 2. pressure relief mechanism; 21. adhesive film; 211. first sub-film; 212. second sub-film; 213. third sub-film; 22. cover sheet; X. first direction; Y. second direction; 10. battery cell; and 20. through-hole.

In the accompanying drawings, the figures are not necessarily drawn to scale.

### DETAILED DESCRIPTION

To make the objectives, technical solutions, and advantages in some embodiments of this application clearer, the following clearly and completely describes the technical solutions in some embodiments of this application with reference to the accompanying drawings in these embodiments of this application. Apparently, the described embodiments are some but not all of these embodiments of this application.

Currently, from the perspective of market development, application of batteries is becoming more and more extensive. Batteries have been widely used in not only energy storage power supply systems such as hydroelectric, thermal, wind, and solar power plants, but also other fields including electric transportation tools such as electric bicycles, electric motorcycles and electric vehicles, military equipment, and aerospace.

The battery cells mentioned in some embodiments of this application may be secondary batteries or primary batteries, and secondary batteries are batteries that can be charged after being discharged to activate the active materials for continuous use.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead-storage battery cell, or the like.

A battery cell generally includes an electrode assembly. The electrode assembly includes a positive electrode, a negative electrode, and a separator. During charging and discharging of the battery cell, active ions (for example, lithium ions) are intercalated and deintercalated between the positive electrode and the negative electrode. The separator is provided between the positive electrode and the negative electrode, can prevent a short circuit between the positive and negative electrodes, and can allow active ions to pass through.

In some embodiments, the electrode assembly is a wound structure or a laminated structure. Optionally, the electrode assembly is a cylindrical wound structure.

In some embodiments, the battery cell may include a casing. The casing is used for packaging the electrode assembly, electrolyte, and other components. The casing may be a steel casing, an aluminum casing, a plastic casing (for example, polypropylene), a composite metal casing (for example, copper-aluminum composite casing), or the like.

As an example, the battery cell may be a cylindrical battery cell, a prismatic battery cell, or a battery cell of another shape. The prismatic battery cell includes a square-shell battery cell, a blade-shaped battery cell, and a polygonal prismatic battery cell such as a hexagonal prismatic battery cell.

Since heat is generated when a battery cell operates, especially when the battery cell is in a thermal runaway state, a large amount of heat is generated along with the release of a large amount of gas, causing a sharp increase in the internal pressure of the battery cell. To mitigate the risk of explosion and the like, a pressure relief mechanism is usually provided on the shell cover of the battery cell to relieve pressure. In the related art, for common steel-shell battery cells, a groove is usually provided on the shell cover so that when the internal gas pressure of the battery cell becomes excessively high, the groove ruptures to form a pressure relief passage for relieving the internal pressure. However, the thermal sensitivity of the groove in this solution is poor, and it cannot respond timely to overheating conditions, resulting in poor reliability of pressure relief.

Based on the above considerations, to improve the reliability of battery cell pressure relief, this application provides a battery cell. The battery cell includes a shell and a pressure relief mechanism, where the shell is provided with a through-hole; the pressure relief mechanism is disposed at the through-hole; the pressure relief mechanism includes an adhesive film and a cover sheet; the cover sheet is bonded to the shell via the adhesive film and covers the through-hole; and the adhesive film is capable of melting under heat to form a pressure relief passage connecting the interior and exterior of the shell. A bonding area between the cover sheet and the shell is A, a cross-sectional area of the through-hole covered by the cover sheet is B, and $1.778 \leq \frac{A}{B} \leq 16.361$ . Since the bonding force between the cover sheet and the shell is proportional to the bonding area A between the cover sheet and the shell, and the pressure exerted on the cover sheet by a pressure relief substance inside the shell through the through-hole is proportional to the cross-sectional area B of the through-hole covered by the cover sheet, when the pressure exerted on the cover sheet by the pressure relief substance inside the shell exceeds the bonding force between the cover sheet and the shell, the cover sheet detaches or even falls off from the through-hole. By setting a ratio of the bonding area A between the cover sheet and the shell to the cross-sectional area B of the through-hole covered by the cover sheet within a reasonable range, when an internal pressure of the battery cell reaches a preset value, the pressure exerted on the cover sheet by the pressure relief substance inside the shell can exceed the bonding force between the cover sheet and the shell, allowing the cover sheet to fall off in a timely manner to form a pressure relief passage, thereby timely releasing the internal pressure of the battery cell, so that the battery cell can exhibit good reliability while achieving overheating pressure relief.

The technical solutions provided by the battery cell and the electrical apparatus of this application are further described below through specific embodiments.

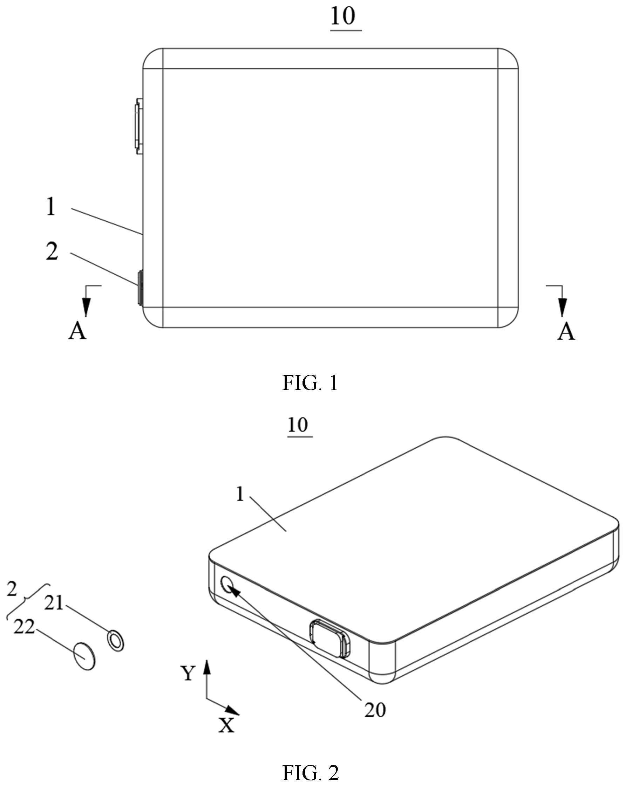

Some embodiments of this application provide a battery cell casing. As shown in FIG. 1, the battery cell casing includes a shell 1 and a pressure relief mechanism 2. As shown in FIG. 2, the shell 1 is provided with a through-hole 20; the pressure relief mechanism 2 is disposed at the through-hole 20; the pressure relief mechanism 2 includes an adhesive film 21 and a cover sheet 22; the cover sheet 22 is bonded to the shell 1 via the adhesive film 21 and covers the through-hole 20; and the adhesive film 21 is capable of melting under heat to cause the cover sheet 22 to detach or fall off to form a pressure relief passage connecting the interior and exterior of the shell 1. A bonding area between the cover sheet 22 and the shell 1 is A, a cross-sectional area of the through-hole covered by the cover sheet 22 is B, and $1.778 \leq \frac{A}{B} \leq 16.361$.

The shell 1 may be a wall structure provided on an outer periphery of the battery cell 10, and can form a cavity for accommodating other components of the battery cell 10 such as the electrode assembly and electrolyte, and the shell 1 can protect the components in the cavity. The through-hole 20 may be a hole-like structure provided in the shell 1, and connects the interior and exterior of the shell 1.

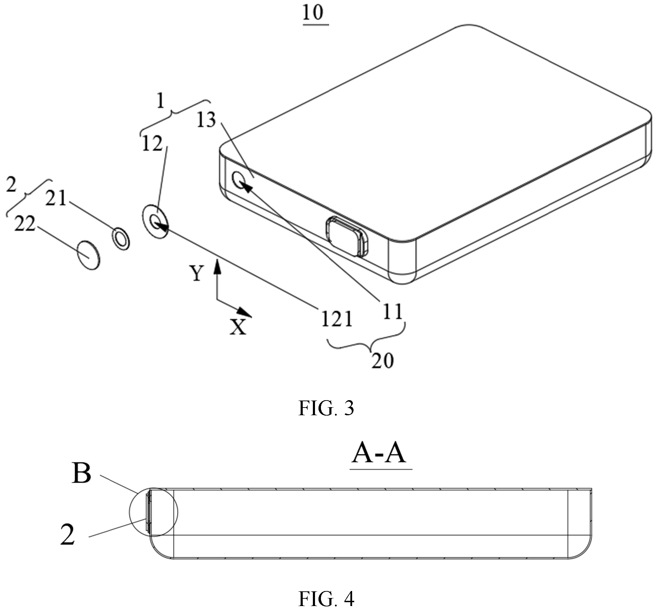

As shown in FIG. 4, the pressure relief mechanism 2 may be a component provided on an outer side of the shell 1 for relieving the internal pressure of the battery cell 10, and is covered at the through-hole 20. The pressure relief mechanism 2 can connect the through-hole 20 to the exterior in the case of mechanical abuse, so that the pressure inside the battery cell 10 is relieved to the exterior.

The cover sheet 22 may be a sheet-like member in the pressure relief mechanism 2 for covering the through-hole 20, and is used to seal the through-hole 20 so that the battery cell 10 is isolated from the exterior under normal operating conditions. The adhesive film 21 may be a film layer structure formed after solidification of a hot-melt adhesive substance, and the cover sheet 22 is bonded to the shell 1 using the adhesive film 21. The adhesive film 21 formed by the hot-melt adhesive substance can melt under heat, reducing the bonding force provided; and the cover sheet 22 can fall off from the shell 1 under the action of the internal pressure of the battery cell 10, so that the through-hole 20 connects the interior and exterior of the shell 1 to form a pressure relief passage, and substances inside the shell 1 are released to the exterior from the pressure relief passage.

In some embodiments, the cover sheet 22 may be configured as a metal member with high thermal conductivity, so that the cover sheet 22 has good thermal conductivity performance, thereby allowing heat generated by the battery cell 10 to be quickly transferred to a side of the adhesive film 21 facing away from the shell 1 through the cover sheet 22, and achieving uniform heating of the adhesive film 21, which is conducive to improving the thermal runaway pressure relief sensitivity of the pressure relief mechanism 2.

For example, the cover sheet 22 may be a nickel sheet, a stainless steel sheet, or a copper sheet, where the nickel sheet, the stainless steel sheet, and the copper sheet all have high thermal conductivity, which is conducive to further improving the thermal runaway pressure relief sensitivity of the battery cell 10, so that when the temperature of the battery cell 10 becomes excessively high, the adhesive film 21 can melt in a timely manner, causing the cover sheet 22 to fall off and achieve rapid pressure relief.

The bonding area A between the cover sheet 22 and the shell 1 may be an area of a region where the cover sheet 22 is bonded to the shell 1 via the adhesive film 21. The adhesive film 21 is located between the cover sheet 22 and the shell 1 to provide bonding force, bonding the cover sheet 22 to the shell 1. The bonding force between the cover sheet 22 and the shell 1 is proportional to the bonding area A between the cover sheet 22 and the shell 1. The larger the bonding area A between the cover sheet 22 and the shell 1, the greater the bonding force between the cover sheet 22 and the shell 1.

The cross-sectional area B of the through-hole covered by the cover sheet 22 may be an area on which the pressure relief substance inside the shell 1 acts on the cover sheet 22. The pressure relief substance acts on this region of the cover sheet 22, causing the cover sheet 22 to be subjected to pressure from the pressure relief substance inside the shell 1. The pressure exerted on the cover sheet 22 by the pressure relief substance inside the shell 1 through the through-hole is proportional to the cross-sectional area B of the through-hole covered by the cover sheet 22. The larger the cross-sectional area B of the through-hole covered by the cover sheet 22, the greater the pressure exerted on the cover sheet 22 by the pressure relief substance. When the pressure exerted on the cover sheet 22 by the pressure relief substance inside the shell 1 exceeds the bonding force between the cover sheet 22 and the shell 1, the cover sheet 22 falls off from the through-hole 20.

By limiting the ratio range of the bonding area A between the cover sheet 22 and the shell 1 to the cross-sectional area B of the through-hole covered by the cover sheet 22 within a reasonable range, that is, $1.778 \leq \frac{A}{B} \leq 16.361$, when the internal pressure of the shell 1 rises, the pressure exerted on the cover sheet 22 by the pressure relief substance inside the shell 1 can more easily exceed the bonding force between the cover sheet 22 and the shell 1, allowing the battery cell 10 to relieve pressure with relatively small deformation, thereby timely releasing the internal pressure of the battery cell 10.

In some embodiments, the ratio range of the bonding area A between the cover sheet 22 and the shell 1 to the cross-sectional area B of the through-hole covered by the cover sheet 22 may be set to $2.968 \leq \frac{A}{B} \leq 8.776$. For example, $\frac{A}{B}$ may be 3.34, 4.165, or 5.25, so that the bonding force between the cover sheet 22 and the shell 1 can respond sensitively to the internal pressure of the shell 1, allowing the cover sheet 22 to fall off in a timely manner for pressure relief after the internal pressure of the shell 1 rises, so that the battery cell 10 can relieve pressure with relatively small deformation.

In the above structure, by limiting the ratio range of the bonding area A between the cover sheet 22 and the shell 1 to the cross-sectional area B of the through-hole covered by the cover sheet 22, when the internal pressure of the battery cell 10 reaches a preset value, the cover sheet 22 can fall off in a timely manner to form a pressure relief passage, thereby timely releasing the internal pressure of the battery cell 10, so that the battery cell 10 can exhibit good reliability while achieving overheating pressure relief.

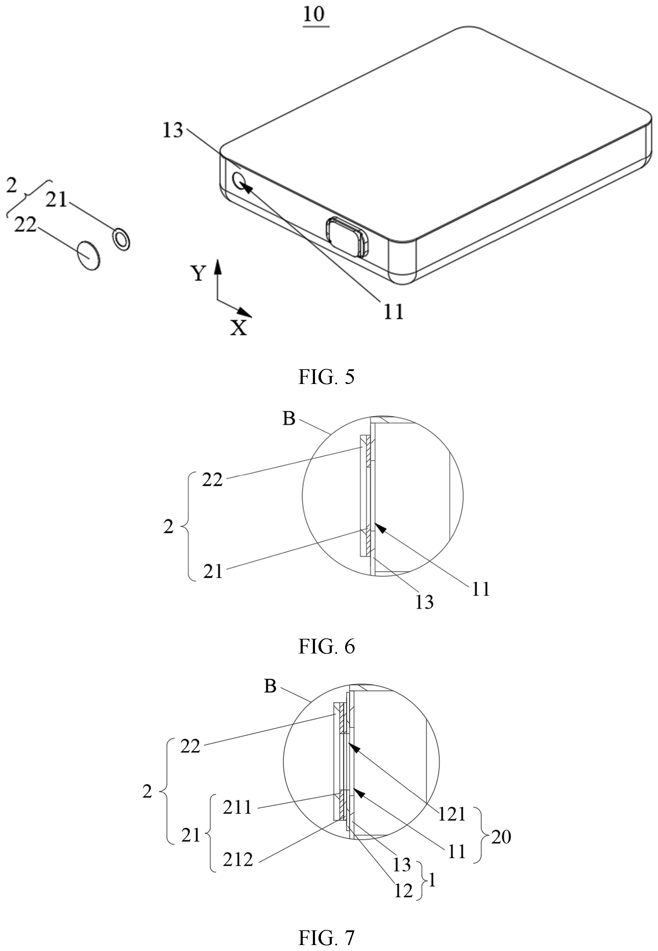

In some embodiments, as shown in FIGs. 5 and 6, the shell 1 includes a side wall 13, the through-hole 20 includes a first through-hole 11 provided on the side wall 13, and the cover sheet 22 is bonded to the side wall 13 via the adhesive film 21 and covers the first through-hole 11.

The side wall 13 may be a part of the wall structure of the shell 1, and the pressure relief mechanism 2 is provided on this part of the wall structure. The first through-hole 11 may be a hole-like structure provided on the side wall 13, and can connect the interior and exterior of the shell 1. By providing the first through-hole 11 of the side wall 13 and including the first through-hole 11 in the through-hole 20, the first through-hole 11 on the side wall 13 can serve as the through-hole 20 in the shell 1 for venting substance.

The cover sheet 22 is bonded to the side wall 13 via the adhesive film 21 and covers the first through-hole 11, sealing the first through-hole 11, so that the battery cell 10 can be isolated from the exterior under normal operating conditions. In the case of mechanical abuse, the adhesive film 21 can melt under heat, reducing the bonding force provided, and the cover sheet 22 can detach or even fall off from the side wall 13 under the action of the internal pressure of the battery cell 10, so that the first through-hole 11 forms a pressure relief passage connecting the interior and exterior of the shell 1, and substances inside the shell 1 are released to the exterior along the pressure relief passage formed by the first through-hole 11.

In some embodiments, as shown in FIG. 3, the shell 1 further includes an adapting member 12 provided on an outer side of the side wall 13, the through-hole 20 further includes a second through-hole 121 provided on the adapting member 12, the second through-hole 121 is in communication with the first through-hole 11, and the cover sheet 22 is bonded to a side of the adapting member 12 away from the shell 1 via the adhesive film 21 and covers the second through-hole 121.

The adapting member 12 may be a sheet-like member provided on the outer side of the side wall 13 and located between the side wall 13 and the cover sheet 22, and two sides of the adapting member 12 in a thickness direction connected to the side wall 13 and the cover sheet 22 respectively, so that the adapting member 12 has larger side surfaces for connection with the side wall 13 and the cover sheet 22, which helps to improve the firmness of the connection between the adapting member 12 and the side wall 13 as well as the cover sheet 22.

The second through-hole 121 may be a hole-like structure provided on the adapting member 12, and is in communication with the first through-hole 11 and penetrates the adapting member 12 along the thickness direction of the adapting member 12, so that venting substance can enter the second through-hole 121 from the first through-hole 11 for discharge outside the battery cell 10. In some embodiments, an axis of the second through-hole 121 is configured to coincide with an axis of the first through-hole 11, so that the second through-hole 121 and the first through-hole 11 are coaxially arranged, which not only facilitates the discharge of venting substance, but also facilitates the placement of the adapting member 12 at the position of the first through-hole 11.

By bonding the cover sheet 22 to the side of the adapting member 12 away from the side wall 13 via the adhesive film 21 and covering the second through-hole 121, the cover sheet 22 can be connected to the side wall 13 through the adapting member 12, which is conducive to improving the connection firmness of the cover sheet 22 on the side wall 13 and the sealing effect on the first through-hole 11. The cover sheet 22 is bonded to the adapting member 12 via the adhesive film 21 and covers the second through-hole 121, so that after the cover sheet 22 or the adapting member 12 is heated, the adhesive film 21 can melt, and the cover sheet 22 can fall off from the adapting member 12, achieving pressure relief of the battery cell 10.

For example, the adapting member 12 may be made of the same material as the cover sheet 22, so that the adapting member 12 and the cover sheet 22 have the same thermal conductivity performance, making two sides of the adhesive film 21 located between the adapting member 12 and the cover sheet 22 heated uniformly, which is conducive to improving the thermal runaway pressure relief sensitivity and reliability of the pressure relief mechanism 2. In some embodiments, both the adapting member 12 and the cover sheet 22 may be made of nickel sheets, so that both the adapting member 12 and the cover sheet 22 have good thermal conductivity.

In some embodiments, the adapting member 12 may be bonded to the outer side of the side wall 13 using an adhesive, making the connection between the adapting member 12 and the side wall 13 convenient. The adapting member 12 may also be welded to the outer side of the side wall 13, so that the materials of the adapting member 12 and the side wall 13 can melt into one, making the connection between the adapting member 12 and the side wall 13 firm. For example, the adapting member 12 may be connected to the outer side of the side wall 13 by laser welding, ensuring high welding quality between the adapting member 12 and the side wall 13, which is conducive to improving the firmness of the connection between the adapting member 12 and the side wall 13. For example, the adapting member 12 may be connected to the side wall 13 by laser penetration welding, which not only can complete the welding of metal materials quickly and efficiently, improving production efficiency, but also can make the weld joint of the metal material have excellent quality, less likely to cause surface corrosion, discoloration, and other problems of the adapting member 12, which is conducive to further improving the firmness and reliability of the connection between the adapting member 12 and the side wall 13.

In some embodiments, along an axial direction of the second through-hole 121, a projection of the second through-hole 121 is located within a projection range of the first through-hole 11.

By configuring the projection of the second through-hole 121 along the axial direction of the second through-hole 121 to be located within the projection range of the first through-hole 11 along the axial direction of the second through-hole 121, a cross-sectional area of the first through-hole 11 is greater than a cross-sectional area of the second through-hole 121, allowing the pressure relief substance inside the shell 1 to flow smoothly along an arrangement direction of the first through-hole 11 and the second through-hole 121. In addition, by setting the cross-sectional area of the second through-hole 121 to be less than the cross-sectional area of the first through-hole 11, when the cover sheet 22 covers the second through-hole 121, a larger bonding area with the adapting member 12 can be obtained, which is conducive to improving the reliability of the connection between the cover sheet 22 and the adapting member 12. At this time, an outer diameter of the adapting member 12 is larger than a hole diameter of the first through hole 11, enabling a tight connection between the adapting member 12 and the shell 1. In this solution, the shape or size of the first through hole 11 is not particularly limited in this application, provided that the above-mentioned conditions are satisfied.

In some embodiments, a first direction X is perpendicular to a second direction Y, and both the first direction X and the second direction Y are perpendicular to an axial direction of the first through-hole 11; a length of the first through-hole 11 in the first direction X is greater than a length of the first through-hole 11 in the second direction Y; and/or a length of the second through-hole 121 in the first direction X is greater than a length of the second through-hole 121 in the second direction Y.

The first direction X and the second direction Y are two mutually perpendicular directions, and both directions are perpendicular to the axial direction of the first through-hole 11, so that the first direction X and the second direction Y are two perpendicular directions in the same plane.

By setting the length of the first through-hole 11 in the first direction X to be greater than the length of the first through-hole 11 in the second direction Y, the first through-hole 11 can enlarge the cross-sectional area in the second direction Y, which is conducive to improving the discharge capacity of the first through-hole 11. By setting the length of the second through-hole 121 in the first direction X to be greater than the length of the second through-hole 121 in the second direction Y, the second through-hole 121 can enlarge the cross-sectional area in the second direction Y, which is conducive to improving the discharge capacity of the second through-hole 121.

In some embodiments, the length of the first through-hole 11 in the first direction X may be greater than the length of the first through-hole 11 in the second direction Y, or the length of the second through-hole 121 in the first direction X may be greater than the length of the second through-hole 121 in the second direction Y, so that part of the pressure relief passage can be enlarged in the first direction X to improve the pressure relief capacity of the pressure relief passage. Alternatively, the length of the first through-hole 11 in the first direction X may be greater than the length of the first through-hole 11 in the second direction Y, and the length of the second through-hole 121 in the first direction X may also be greater than the length of the second through-hole 121 in the second direction Y, so that the entire pressure relief passage can be enlarged in the first direction X, which is conducive to improving the pressure relief capacity of the pressure relief passage.

In some embodiments, a length of the side wall 13 in the first direction X is D, a length of the side wall 13 in the second direction Y is E, 10 mm ≤ D ≤ 100 mm, and 1 mm ≤ E ≤ 20 mm.

By setting the length E of the side wall 13 in the second direction Y to satisfy 1 mm ≤ E ≤ 20 mm, the length of the battery cell 10 in the second direction Y is in the range of 1 mm to 20 mm, so that the battery cell 10 can be within a reasonable size range while also limiting the length of the first through-hole 11 in the second direction Y. In some embodiments, the range of the length E of the side wall 13 in the second direction Y may be set to 2.5 mm to 7 mm. For example, the length of the side wall 13 in the second direction Y may be 3 mm, 4 mm, or 5 mm, so that the side wall 13 can provide a reasonable size for the arrangement of the first through-hole 11 in the second direction Y.

By setting the length D of the side wall 13 in the first direction X to satisfy 10 mm ≤ D ≤ 100 mm, the length of the battery cell 10 in the first direction X is in the range of 10 mm to 100 mm, so that the battery cell 10 can be within a reasonable size range while also limiting the length of the first through-hole 11 in the first direction X.

In some embodiments, the range of the length D of the side wall 13 in the first direction X may be set to 15 mm to 80 mm. For example, the length of the side wall 13 in the first direction X may be 30 mm, 50 mm, or 70 mm, so that the side wall 13 has sufficient size in the first direction X for arranging structures or components such as the first through-hole 11 and electrode terminals.

In some embodiments, the length of the first through-hole 11 in the second direction Y is L1, and 1 mm ≤ L1 ≤ 6 mm. The length of the second through-hole 121 in the second direction Y is L2, and 0.2 mm ≤ L2 ≤ 5 mm. The length of the first through-hole 11 in the first direction X is L3, and 1 mm ≤ L3 ≤ 6 mm. The length of the second through-hole 121 in the first direction X is L4, and 0.2 mm ≤ L4 ≤ 5 mm.

By setting the range of the length L1 of the first through-hole 11 in the second direction Y to 1 mm to 6 mm, the length of the first through-hole 11 in the second direction Y can match the length of the side wall 13 in the second direction Y, making it less likely for the first through-hole 11 to affect the structural strength of the side wall 13, which is conducive to maintaining the structural strength of the battery cell 10. For example, the range of the length L1 of the first through-hole 11 in the second direction Y may be set to 1 mm to 3.5 mm. In some embodiments, the length L1 of the first through-hole 11 in the second direction Y may be set to 2 mm or 3 mm, so that the length of the first through-hole 11 in the second direction Y can better cooperate with the length of the side wall 13 in the second direction Y, making the first through-hole 11 provided on the side wall 13 less likely to affect the structural strength of the side wall 13.

By setting the range of the length L3 of the first through-hole 11 in the first direction X to 1 mm to 6 mm, so that the length of the first through-hole 11 in the first direction X does not affect the structural strength of the side wall 13 due to being too long, and the cross-sectional area of the first through-hole 11 is not reduced due to being too short, so that the discharge capacity of the first through-hole 11 is not easily affected. In some embodiments, the length of the first through-hole 11 in the first direction X may be set equal to the length in the second direction Y. For example, the first through-hole 11 may be configured as a circular hole, which not only makes the first through-hole 11 easy to process, but also can reduce the influence of the first through-hole 11 on the internal stress of the side wall 13, which is conducive to reducing the influence on the structural strength of the side wall 13.

By setting the range of the length L2 of the second through-hole 121 in the second direction Y to 0.2 mm to 5 mm, the length of the second through-hole 121 in the second direction Y can match the length of the side wall 13 in the second direction Y and the length of the first through-hole 11 in the second direction Y, making it less likely for the second through-hole 121 to affect the structural strength of the adapting member 12, which is conducive to maintaining the structural strength of the battery cell 10. For example, the range of the length L2 of the second through-hole 121 in the second direction Y may be set to 0.5 mm to 2 mm. In some embodiments, the length of the second through-hole 121 in the second direction Y may be set to 1 mm or 1.5 mm, so that the length of the second through-hole 121 in the second direction Y can better cooperate with the length of the first through-hole 11 in the second direction Y, allowing venting substance to flow smoothly from the first through-hole 11 toward the second through-hole 121.

By setting the range of the length L4 of the second through-hole 121 in the first direction X to 0.2 mm to 5 mm, the length of the second through-hole 121 in the first direction X does not affect the structural strength of the adapting member 12 due to being too long, and the cross-sectional area of the second through-hole 121 is not reduced due to being too short, so that the discharge capacity of the second through-hole 121 is not easily affected. In some embodiments, the length of the second through-hole 121 in the first direction X may be set equal to the length in the second direction Y. For example, the second through-hole 121 may be configured as a circular hole, which not only makes the second through-hole 121 easy to process, but also can reduce the influence of the second through-hole 121 on the internal stress of the adapting member 12, which is conducive to reducing the influence on the structural strength of the adapting member 12.

In some embodiments, the first through-hole 11 is configured as a runway-shaped hole, and/or the second through-hole 121 is configured as a runway-shaped hole.

A runway-shaped hole may refer to a hole whose shape in a cross-section perpendicular to an axis of the hole is runway-shaped. The first through-hole 11 is configured as a runway-shaped hole, where a long axis of the runway-shaped hole is arranged along the first direction X, and a short axis is arranged along the second direction Y, so that the first through-hole 11 can increase the cross-sectional area by extending the length in the second direction Y, which is conducive to improving the capacity of the first through-hole 11 to pass pressure relief substances. The second through-hole 121 is configured as a runway-shaped hole, where a long axis of the runway-shaped hole is arranged along the first direction X, and a short axis is arranged along the second direction Y, so that the second through-hole 121 can increase the cross-sectional area by extending the length in the second direction Y, which is conducive to improving the capacity of the second through-hole 121 to pass pressure relief substances.

In some embodiments, a projection of a bonding region between the cover sheet 22 and the adapting member 12 along the axial direction of the first through-hole 11 is a first projection, a width of the first projection in a radial direction of the first through-hole 11 is C, and 0.6 mm ≤ C ≤ 0.95 mm.

The first projection may be a projection of a bonding region between the cover sheet 22 and the adapting member 12 along the axial direction of the first through-hole 11. Since the adapting member 12 is provided with the second through-hole 121, the bonding region between the cover sheet 22 and the adapting member 12 is annular. The range of the width C of the first projection in the radial direction of the first through-hole 11 is set to 0.6 mm to 0.95 mm, which not only enables the bonding region between the cover sheet 22 and the adapting member 12 to provide sufficient bonding force for the cover sheet 22, mitigating the risk of the cover sheet 22 falling off under normal operating conditions of the battery cell 10, but also allows the cover sheet 22 to fall off from the adapting member 12 in a timely manner under thermal runaway conditions, facilitating timely discharge of venting substance. In some embodiments, the range of the width C of the first projection in the radial direction of the first through-hole 11 may be 0.65 mm to 0.9 mm. For example, the width C of the first projection in the radial direction of the first through-hole 11 may be set to 0.65 mm, 0.7 mm, or 0.8 mm, so that the bonding force provided by the adhesive film 21 in the bonding region can both mitigate the risk of the cover sheet 22 falling off under normal operating conditions and allow the cover sheet 22 to fall off in a timely manner under thermal runaway conditions to timely discharge venting substance.

In some embodiments, 0.2 mm² ≤ B ≤ 4.8 mm².

By setting the range of the cross-sectional area B of the through-hole covered by the cover sheet 22 to satisfy 0.28 mm² ≤ B ≤ 4.524 mm², the cover sheet 22 can be subjected to the pressure inside the shell 1 in a reliable manner and is not prone to falling off under normal operating conditions due to excessive internal pressure from the shell 1, which is conducive to improving the reliability of the pressure relief mechanism 2.

In some embodiments, the range of the cross-sectional area B of the through-hole covered by the cover sheet 22 may be 0.785 mm² to 4.524 mm², so that the pressure relief mechanism 2 has higher reliability.

In some embodiments, 3.581 mm² ≤ A ≤ 8.042 mm².

The range of the bonding area A between the cover sheet 22 and the shell 1 is set to 3.581 mm² to 8.042 mm², which not only enables the cover sheet 22 to fall off smoothly from the adapting member 12 under thermal runaway conditions, but also allows the cover sheet 22 to be firmly connected to the adapting member 12 under normal operating conditions. In some embodiments, the range of the bonding area A between the cover sheet 22 and the shell 1 may be 4.406 mm² to 8.042 mm², so that the cover sheet 22 can be firmly connected to the adapting member 12 under normal operating conditions and is not prone to falling off due to factors such as external component impacts, making the reliability of the pressure relief mechanism 2 higher.

In some embodiments, a melting point of the adhesive film 21 is T1, and 110°C ≤ T1 ≤ 130°C.

By setting the melting point T1 of the adhesive film 21 to satisfy 110°C ≤ T1 ≤ 130°C, the adhesive film 21 exhibits good thermal sensitivity under thermal runaway conditions and does not melt under normal operating conditions.

In some embodiments, 118°C ≤ T1 ≤ 128°C is satisfied, so that the melting point range of the adhesive film 21 can both provide good thermal sensitivity for the pressure relief mechanism 2 and reduce the possibility of melting under normal operating conditions.

For example, the melting point T1 of the adhesive film 21 may be 120°C or 125°C, so that the adhesive film 21 has good thermal sensitivity and good reliability.

In some embodiments, as shown in FIG. 7, the adhesive film 21 includes a first sub-film 211 and a second sub-film 212 stacked along the axial direction of the first through-hole 11, the first sub-film 211 is located between the second sub-film 212 and the cover sheet 22, and a melting point of the second sub-film 212 is lower than the melting point of the first sub-film 211.

The first sub-film 211 and the second sub-film 212 are both partial film layers in the adhesive film 21, and the two are stacked along the axial direction of the first through-hole 11. By arranging the first sub-film 211 between the second sub-film 212 and the cover sheet 22 and setting the melting point of the second sub-film 212 lower than the melting point of the first sub-film 211, when the adhesive film 21 is heated, the second sub-film 212 is more likely to melt, making the cover sheet 22 more likely to fall off due to the melting of the second sub-film 212, which is conducive to improving the sensitivity of pressure relief of the pressure relief mechanism 2.

For example, the melting point of the second sub-film 212 is T2, and 100°C ≤ T2 ≤ 120°C.

By setting the melting point T2 of the second sub-film 212 to satisfy 100°C ≤ T2 ≤ 120°C, the second sub-film 212 is more likely to melt under thermal runaway conditions.

In some embodiments, 105°C ≤ T2 ≤ 115°C, for example, the melting point T2 of the second sub-film 212 may be 110°C, so that the second sub-film 212 is more likely to melt under thermal runaway conditions, allowing the cover sheet 22 to detach smoothly.

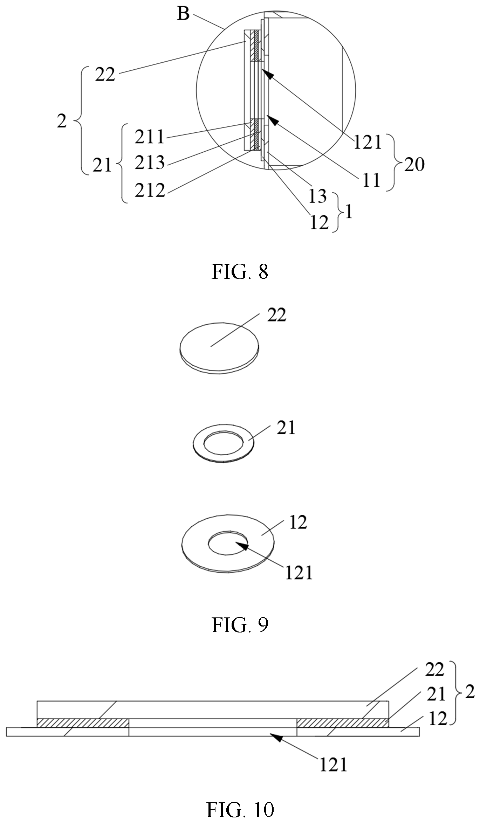

In some embodiments, as shown in FIG. 8, the adhesive film 21 further includes a third sub-film 213 located between the first sub-film 211 and the second sub-film 212, and a melting point of the third sub-film 213 is higher than the melting point of the first sub-film 211 and the melting point of the second sub-film 212.

The third sub-film 213 is a partial film layer in the adhesive film 21. By arranging the third sub-film 213 between the first sub-film 211 and the second sub-film 212 and setting the melting point of the third sub-film 213 higher than the melting point of the first sub-film 211 and the melting point of the second sub-film 212, the third sub-film 213 can provide good support for the overall adhesive film 21, which is conducive to improving the overall strength of the adhesive film 21.

In some embodiments, the melting point of the third sub-film 213 is T3, and 130°C ≤ T3 ≤ 150°C.

By setting the melting point T3 of the third sub-film 213 to satisfy 130°C ≤ T3 ≤ 150°C, the melting point of the third sub-film 213 is higher than the melting point of the first sub-film 211 and the melting point of the second sub-film 212 on two sides thereof, so that the third sub-film 213 is less likely to melt relative to the first sub-film 211 and the second sub-film 212, and the third sub-film 213 can provide good overall support for the adhesive film 21, reducing the possibility of the adhesive film 21 melting under normal operating conditions. For example, the melting point of the third sub-film 213 may be set to 135°C, 140°C, or 145°C, so that the third sub-film 213 is not prone to melting and can better maintain the structural strength of the adhesive film 21, making the adhesive film 21 less likely to be damaged.

In some embodiments, the adhesive film 21 includes polypropylene.

By including polypropylene in the adhesive film 21, the adhesive film 21 not only has good bonding capability to firmly bond the cover sheet 22 to the shell 1 but also has the characteristic of melting under heat. For example, the adhesive film 21 may also comprise at least one of thermoplastic materials such as polyethylene, polyvinyl chloride, polystyrene, polyamide, polyoxymethylene, polycarbonate, polyphenylene ether, polysulfone, and rubber, so that the adhesive film 21 can melt under heat to achieve falling off of the cover sheet 22 from the shell 1.

In some embodiments, a thickness of the adhesive film 21 in the axial direction of the first through-hole 11 is H, and 10 µm ≤ H ≤ 48 µm.

By setting the range of the thickness H of the adhesive film 21 in the axial direction of the first through-hole 11 to 8 µm to 49 µm, the adhesive film 21 has sufficient structural strength without causing material waste due to excessive thickness. In some embodiments, the range of the thickness H of the adhesive film 21 in the axial direction of the first through-hole 11 may be set to 40 µm ≤ H ≤ 45 µm. For example, H may be 42 µm or 44 µm, so that the thickness of the adhesive film 21 is within a reasonable range, providing sufficient structural strength for the adhesive film 21 without causing material waste.

In some embodiments, a bonding strength of the adhesive film 21 is P, and $0.08 MPa \leq \frac{A}{B} ⋅ P \leq 2 MPa$.

The bonding strength P of the adhesive film 21 refers to the bonding force that the adhesive film 21 can provide per unit bonding area. By limiting the range of $\frac{A}{B} ⋅ P$ to 0.08 MPa to 2 MPa, the adhesive film 21 can provide sufficient force for the cover sheet 22 to seal the pressure relief passage, making the cover sheet 22 less likely to fall off under normal operating conditions, while when the internal pressure of the shell 1 becomes excessive, the internal pressure of the shell 1 overcomes the bonding effect of the adhesive film 21 to cause the cover sheet 22 to fall off, achieving pressure relief.

For example, the range of $\frac{A}{B} ⋅ P$ may be limited to 0.1 MPa to 1.5 MPa, so that the adhesive film 21 can provide sufficient bonding strength while also allowing timely relief of the pressure inside the shell 1.

In some embodiments, $\frac{A}{B} ⋅ P$ can be adjusted according to the size of the battery cell 10. As the size of the battery cell 10 increases, $\frac{A}{B} ⋅ P$ can be correspondingly reduced, so that the bonding strength of the adhesive film 21 matches the reduced pressure resistance that accompanies the increase in the size of the battery cell 10.

In some embodiments, the first through-hole 11 is a liquid injection hole.

By reusing the liquid injection hole as the first through-hole 11 for pressure relief, the preparation process of the battery cell 10 can be further simplified, which is conducive to reducing hole-punching steps and lowering the preparation cost of the battery cell 10.

In other embodiments, the first through-hole 11 may also be another through-hole formed on the side wall 13 that connecting the interior and exterior of the shell 1.

The beneficial effects of the battery cell casing provided by the specific embodiments of this application are further illustrated below through comparative experiments.

In this comparative experiment, the battery cell 10 is used as the test object. The battery cell casing in the battery cell 10 includes a shell 1 and a pressure relief mechanism 2. The pressure relief mechanism 2 includes an adhesive film 21 and a cover sheet 22. The shell 1 includes a side wall 13 and an adapting member 12. The side wall 13 is provided with a first through-hole 11. The adapting member 12 is provided with a second through-hole 121 in communication with the first through-hole 11, and the cover sheet 22 is bonded to the side of the adapting member 12 away from the side wall 13 via the adhesive film 21 and covers the second through-hole 121.

The battery cell 10 in which the ratio of the bonding area A between the cover sheet 22 and the shell 1 to the cross-sectional area B of the second through-hole 121 covered by the cover sheet 22 falls within the range of $1.778 \leq \frac{A}{B} \leq 16.361$ is used as the test object in some embodiments of the comparative experiment. The battery cell 10 in which the ratio of the bonding area A between the cover sheet 22 and the shell 1 to the cross-sectional area B of the second through-hole 121 covered by the cover sheet 22 exceeds the range of $1.778 \leq \frac{A}{B} \leq 16.361$ is used as the test object in the comparative examples of the comparative experiment.

The detection of the pressure relief pass rate of the battery cell 10 is performed by first charging the battery cell 10 at 37°C until the voltage of the battery cell 10 reaches 4.505 V, then heating the battery cell 10 to 130°C and maintaining for 30 minutes, and counting the pass rate of pressure relief for multiple battery cells 10 within 30 minutes.

The differences in parameters among the battery cells 10 in the comparative examples and examples are as follows:

### Example 1

The hole diameter of the second through-hole 121 was 0.9 mm, the diameter of the cover sheet 22 was 2.5 mm, the width C of the first projection in the radial direction of the first through-hole 11 was 0.8 mm, the cross-sectional area B of the through-hole 20 covered by the cover sheet 22 was 0.636 mm², the bonding area A between the cover sheet 22 and the shell 1 was 4.273 mm², and $\frac{A}{B} = 6.716$.

### Example 2

The hole diameter of the second through-hole 121 was 1 mm, the diameter of the cover sheet 22 was 2.5 mm, the width C of the first projection in the radial direction of the first through-hole 11 was 0.75 mm, the cross-sectional area B of the through-hole 20 covered by the cover sheet 22 was 0.785 mm², the bonding area A between the cover sheet 22 and the shell 1 was 4.123 mm², and $\frac{A}{B} = 5.25$.

### Example 3

The hole diameter of the second through-hole 121 was 1.1 mm, the diameter of the cover sheet 22 was 2.5 mm, the width C of the first projection in the radial direction of the first through-hole 11 was 0.7 mm, the cross-sectional area B of the through-hole 20 covered by the cover sheet 22 was 0.95 mm², the bonding area A between the cover sheet 22 and the shell 1 was 3.958 mm², and $\frac{A}{B} = 4.165$.

### Example 4

The hole diameter of the second through-hole 121 was 1.2 mm, the diameter of the cover sheet 22 was 2.5 mm, the width C of the first projection in the radial direction of the first through-hole 11 was 0.65 mm, the cross-sectional area B of the through-hole 20 covered by the cover sheet 22 was 1.131 mm², the bonding area A between the cover sheet 22 and the shell 1 was 3.778 mm², and $\frac{A}{B} = 3.34$.

### Example 5

The hole diameter of the second through-hole 121 was 1.3 mm, the diameter of the cover sheet 22 was 2.5 mm, the width C of the first projection in the radial direction of the first through-hole 11 was 0.6 mm, the cross-sectional area B of the through-hole 20 covered by the cover sheet 22 was 1.327 mm², the bonding area A between the cover sheet 22 and the shell 1 was 3.581 mm², and $\frac{A}{B} = 2.968$.

### Example 6

The hole diameter of the second through-hole 121 was 0.8 mm, the diameter of the cover sheet 22 was 2.5 mm, the width C of the first projection in the radial direction of the first through-hole 11 was 0.85 mm, the cross-sectional area B of the through-hole 20 covered by the cover sheet 22 was 0.503 mm², the bonding area A between the cover sheet 22 and the shell 1 was 4.406 mm², and $\frac{A}{B} = 8.766$.

### Example 7

The hole diameter of the second through-hole 121 was 0.7 mm, the diameter of the cover sheet 22 was 2.5 mm, the width C of the first projection in the radial direction of the first through-hole 11 was 0.9 mm, the cross-sectional area B of the through-hole 20 covered by the cover sheet 22 was 0.385 mm², the bonding area A between the cover sheet 22 and the shell 1 was 4.524 mm², and $\frac{A}{B} = 11.755$.

### Example 8

The hole diameter of the second through-hole 121 was 0.6 mm, the diameter of the cover sheet 22 was 2.5 mm, the width C of the first projection in the radial direction of the first through-hole 11 was 0.95 mm, the cross-sectional area B of the through-hole 20 covered by the cover sheet 22 was 0.283 mm², the bonding area A between the cover sheet 22 and the shell 1 was 4.626 mm², and $\frac{A}{B} = 16.361$.

### Example 9

The hole diameter of the second through-hole 121 was 1 mm, the diameter of the cover sheet 22 was 2.6 mm, the width C of the first projection in the radial direction of the first through-hole 11 was 0.8 mm, the cross-sectional area B of the through-hole 20 covered by the cover sheet 22 was 0.785 mm², the bonding area A between the cover sheet 22 and the shell 1 was 4.524 mm², and $\frac{A}{B} = 5.76$.

### Example 10

The hole diameter of the second through-hole 121 was 1.1 mm, the diameter of the cover sheet 22 was 2.7 mm, the width C of the first projection in the radial direction of the first through-hole 11 was 0.8 mm, the cross-sectional area B of the through-hole 20 covered by the cover sheet 22 was 0.95 mm², the bonding area A between the cover sheet 22 and the shell 1 was 4.775 mm², and $\frac{A}{B} = 5.025$.

### Example 11

The hole diameter of the second through-hole 121 was 1.2 mm, the diameter of the cover sheet 22 was 2.8 mm, the width C of the first projection in the radial direction of the first through-hole 11 was 0.8 mm, the cross-sectional area B of the through-hole 20 covered by the cover sheet 22 was 1.131 mm², the bonding area A between the cover sheet 22 and the shell 1 was 5.027 mm², and $\frac{A}{B} = 4.444$.

### Example 12

The hole diameter of the second through-hole 121 was 1.3 mm, the diameter of the cover sheet 22 was 2.9 mm, the width C of the first projection in the radial direction of the first through-hole 11 was 0.8 mm, the cross-sectional area B of the through-hole 20 covered by the cover sheet 22 was 1.327 mm², the bonding area A between the cover sheet 22 and the shell 1 was 5.278 mm², and $\frac{A}{B} = 3.976$.

### Example 13

The hole diameter of the second through-hole 121 was 1.4 mm, the diameter of the cover sheet 22 was 3 mm, the width C of the first projection in the radial direction of the first through-hole 11 was 0.8 mm, the cross-sectional area B of the through-hole 20 covered by the cover sheet 22 was 1.539 mm², the bonding area A between the cover sheet 22 and the shell 1 was 5.529 mm², and $\frac{A}{B} = 3.592$.

### Example 14

The hole diameter of the second through-hole 121 was 1.5 mm, the diameter of the cover sheet 22 was 3.1 mm, the width C of the first projection in the radial direction of the first through-hole 11 was 0.8 mm, the cross-sectional area B of the through-hole 20 covered by the cover sheet 22 was 1.767 mm², the bonding area A between the cover sheet 22 and the shell 1 was 5.781 mm², and $\frac{A}{B} = 3.271$.

### Example 15

The hole diameter of the second through-hole 121 was 1.6 mm, the diameter of the cover sheet 22 was 3.2 mm, the width C of the first projection in the radial direction of the first through-hole 11 was 0.8 mm, the cross-sectional area B of the through-hole 20 covered by the cover sheet 22 was 2.011 mm², the bonding area A between the cover sheet 22 and the shell 1 was 6.032 mm², and $\frac{A}{B} = 3$.

### Example 16

The hole diameter of the second through-hole 121 was 1.7 mm, the diameter of the cover sheet 22 was 3.3 mm, the width C of the first projection in the radial direction of the first through-hole 11 was 0.8 mm, the cross-sectional area B of the through-hole 20 covered by the cover sheet 22 was 2.27 mm², the bonding area A between the cover sheet 22 and the shell 1 was 6.283 mm², and $\frac{A}{B} = 2.768$.

### Example 17

The hole diameter of the second through-hole 121 was 1.8 mm, the diameter of the cover sheet 22 was 3.4 mm, the width C of the first projection in the radial direction of the first through-hole 11 was 0.8 mm, the cross-sectional area B of the through-hole 20 covered by the cover sheet 22 was 2.545 mm², the bonding area A between the cover sheet 22 and the shell 1 was 6.535 mm², and $\frac{A}{B} = 2.568$.

### Example 18

The hole diameter of the second through-hole 121 was 1.9 mm, the diameter of the cover sheet 22 was 3.5 mm, the width C of the first projection in the radial direction of the first through-hole 11 was 0.8 mm, the cross-sectional area B of the through-hole 20 covered by the cover sheet 22 was 2.835 mm², the bonding area A between the cover sheet 22 and the shell 1 was 6.786 mm², and $\frac{A}{B} = 2.393$.

### Example 19

The hole diameter of the second through-hole 121 was 2 mm, the diameter of the cover sheet 22 was 3.6 mm, the width C of the first projection in the radial direction of the first through-hole 11 was 0.8 mm, the cross-sectional area B of the through-hole 20 covered by the cover sheet 22 was 3.142 mm², the bonding area A between the cover sheet 22 and the shell 1 was 7.037 mm², and $\frac{A}{B} = 2.240$.

### Example 20

The hole diameter of the second through-hole 121 was 2.1 mm, the diameter of the cover sheet 22 was 3.7 mm, the width C of the first projection in the radial direction of the first through-hole 11 was 0.8 mm, the cross-sectional area B of the through-hole 20 covered by the cover sheet 22 was 3.464 mm², the bonding area A between the cover sheet 22 and the shell 1 was 7.288 mm², and $\frac{A}{B} = 2.104$.

### Example 21

The hole diameter of the second through-hole 121 was 2.2 mm, the diameter of the cover sheet 22 was 3.8 mm, the width C of the first projection in the radial direction of the first through-hole 11 was 0.8 mm, the cross-sectional area B of the through-hole 20 covered by the cover sheet 22 was 3.801 mm², the bonding area A between the cover sheet 22 and the shell 1 was 7.54 mm², and $\frac{A}{B} = 1.983$.

### Example 22

The hole diameter of the second through-hole 121 was 2.3 mm, the diameter of the cover sheet 22 was 3.9 mm, the width C of the first projection in the radial direction of the first through-hole 11 was 0.8 mm, the cross-sectional area B of the through-hole 20 covered by the cover sheet 22 was 4.155 mm², the bonding area A between the cover sheet 22 and the shell 1 was 7.791 mm², and $\frac{A}{B} = 1.875$.

### Example 23

The hole diameter of the second through-hole 121 was 2.4 mm, the diameter of the cover sheet 22 was 4 mm, the width C of the first projection in the radial direction of the first through-hole 11 was 0.8 mm, the cross-sectional area B of the through-hole 20 covered by the cover sheet 22 was 4.524 mm², the bonding area A between the cover sheet 22 and the shell 1 was 8.042 mm², and $\frac{A}{B} = 1.778$.

### Example 24

The hole diameter of the first through-hole 11 was 0.9 mm, the diameter of the cover sheet 22 was 2.5 mm, the cross-sectional area B of the through-hole 20 covered by the cover sheet 22 was 0.636 mm², the bonding area A between the cover sheet 22 and the shell 1 was 4.273 mm², and $\frac{A}{B} = 6.716$.

### Example 25

The hole diameter of the first through-hole 11 was 1.5 mm, the diameter of the cover sheet 22 was 2.5 mm, the cross-sectional area B of the through-hole 20 covered by the cover sheet 22 was 1.76 mm², the bonding area A between the cover sheet 22 and the shell 1 was 3.14 mm², and $\frac{A}{B} = 1.778$.

### Example 26

The hole diameter of the first through-hole 11 was 0.6 mm, the diameter of the cover sheet 22 was 2.5 mm, the cross-sectional area B of the through-hole 20 covered by the cover sheet 22 was 0.283 mm², the bonding area A between the cover sheet 22 and the shell 1 was 4.626 mm², and $\frac{A}{B} = 16.361$.

### Comparative Example 1

The hole diameter of the second through-hole 121 was 0.55 mm, the diameter of the cover sheet 22 was 2.5 mm, the width C of the first projection in the radial direction of the first through-hole 11 was 0.98 mm, the cross-sectional area B of the through-hole 20 covered by the cover sheet 22 was 0.238 mm², the bonding area A between the cover sheet 22 and the shell 1 was 4.671 mm², and $\frac{A}{B} = 19.661$.

### Comparative Example 2

The hole diameter of the second through-hole 121 was 0.5 mm, the diameter of the cover sheet 22 was 2.5 mm, the width C of the first projection in the radial direction of the first through-hole 11 was 1 mm, the cross-sectional area B of the through-hole 20 covered by the cover sheet 22 was 0.196 mm², the bonding area A between the cover sheet 22 and the shell 1 was 4.712 mm², and $\frac{A}{B} = 24$.

### Comparative Example 3

The hole diameter of the second through-hole 121 was 2.4 mm, the diameter of the cover sheet 22 was 2.5 mm, the width C of the first projection in the radial direction of the first through-hole 11 was 0.05 mm, the cross-sectional area B of the through-hole 20 covered by the cover sheet 22 was 4.524 mm², the bonding area A between the cover sheet 22 and the shell 1 was 0.385 mm², and $\frac{A}{B} = 0.086$.

### Comparative Example 4

The hole diameter of the second through-hole 121 was 2.4 mm, the diameter of the cover sheet 22 was 2.5 mm, the width C of the first projection in the radial direction of the first through-hole 11 was 0.05 mm, the cross-sectional area B of the through-hole 20 covered by the cover sheet 22 was 4.524 mm², the bonding area A between the cover sheet 22 and the shell 1 was 2.545 mm², and $\frac{A}{B} = 0.086$.

### Comparative Example 5

The hole diameter of the second through-hole 121 was 2.4 mm, the diameter of the cover sheet 22 was 3.8 mm, the width C of the first projection in the radial direction of the first through-hole 11 was 1.7 mm, the cross-sectional area B of the through-hole 20 covered by the cover sheet 22 was 4.524 mm², the bonding area A between the cover sheet 22 and the shell 1 was 6.817 mm², and $\frac{A}{B} = 1.507$.

Table 1 shows the pressure relief pass rates of the battery cells in the comparative examples and examples in the comparative experiment of this application.

It can be learned from Examples 1 to 26 in Table 1 that when the ratio range of the bonding area A between the cover sheet 22 and the shell 1 to the cross-sectional area B of the through-hole covered by the cover sheet 22 is configured to be $\frac{A}{B} \leq 16.361$, the pressure relief pass rate of the battery cell 10 can reach 60% or higher. This allows the cover sheet 22 to fall off in a timely manner to form a pressure relief passage when the internal pressure of the battery cell 10 reaches a preset value, thereby timely releasing the internal pressure of the battery cell 10, which is conducive to improving the reliability of pressure relief of the battery cell 10.

It can be learned from Examples 1, 6, 7, 8, and 9 that as the ratio $\frac{A}{B}$ of the bonding area A between the cover sheet 22 and the shell 1 to the cross-sectional area B of the through-hole covered by the cover sheet 22 increases, the pressure relief pass rate of the battery cell 10 shows a decrease trend. This is because as the ratio $\frac{A}{B}$ of the bonding area A between the cover sheet 22 and the shell 1 to the cross-sectional area B of the through-hole covered by the cover sheet 22 increases, the bonding area A between the cover sheet 22 and the shell 1 becomes larger, the bonding force between the cover sheet 22 and the shell 1 becomes greater, and it becomes more difficult for the pressure relief substance inside the shell 1 to push the cover sheet 22 off the shell 1.

**Table 1**

| Scheme | Hole diameter of through-hole (mm) | Diameter of cover sheet (mm) | C (mm) | B (mm²) | A (mm²) | $\frac{A}{B}$ | Pass rate |
|---|---|---|---|---|---|---|---|
| Example 1 | 0.90 | 2.50 | 0.80 | 0.636 | 4.273 | 6.716 | 90% |
| Example 2 | 1.00 | 2.50 | 0.75 | 0.785 | 4.123 | 5.250 | 100% |
| Example 3 | 1.10 | 2.50 | 0.70 | 0.950 | 3.958 | 4.165 | 100% |
| Example 4 | 1.20 | 2.50 | 0.65 | 1.131 | 3.778 | 3.340 | 100% |
| Example 5 | 1.30 | 2.50 | 0.60 | 1.327 | 3.581 | 2.968 | 100% |
| Example 6 | 0.80 | 2.50 | 0.85 | 0.503 | 4.406 | 8.766 | 80% |
| Example 7 | 0.70 | 2.50 | 0.90 | 0.385 | 4.524 | 11.755 | 70% |
| Example 8 | 0.60 | 2.50 | 0.95 | 0.283 | 4.626 | 16.361 | 60% |
| Example 9 | 1.00 | 2.60 | 0.80 | 0.785 | 4.524 | 5.760 | 90% |
| Example 10 | 1.10 | 2.70 | 0.80 | 0.950 | 4.775 | 5.025 | 100% |
| Example 11 | 1.20 | 2.80 | 0.80 | 1.131 | 5.027 | 4.444 | 100% |
| Example 12 | 1.30 | 2.90 | 0.80 | 1.327 | 5.278 | 3.976 | 100% |
| Example 13 | 1.40 | 3.00 | 0.80 | 1.539 | 5.529 | 3.592 | 100% |
| Example 14 | 1.50 | 3.10 | 0.80 | 1.767 | 5.781 | 3.271 | 100% |
| Example 15 | 1.60 | 3.20 | 0.80 | 2.011 | 6.032 | 3.000 | 100% |
| Example 16 | 1.70 | 3.30 | 0.80 | 2.270 | 6.283 | 2.768 | 100% |
| Example 17 | 1.80 | 3.40 | 0.80 | 2.545 | 6.535 | 2.568 | 100% |
| Example 18 | 1.90 | 3.50 | 0.80 | 2.835 | 6.786 | 2.393 | 100% |
| Example 19 | 2.00 | 3.60 | 0.80 | 3.142 | 7.037 | 2.240 | 100% |
| Example 20 | 2.10 | 3.70 | 0.80 | 3.464 | 7.288 | 2.104 | 100% |
| Example 21 | 2.20 | 3.80 | 0.80 | 3.801 | 7.540 | 1.983 | 100% |
| Example 22 | 2.30 | 3.90 | 0.80 | 4.155 | 7.791 | 1.875 | 100% |
| Example 23 | 2.40 | 4.00 | 0.80 | 4.524 | 8.042 | 1.778 | 100% |
| Example 24 | 0.90 | 2.50 | / | 0.636 | 4.273 | 6.716 | 100% |
| Example 25 | 1.50 | 2.50 | / | 1.76 | 3.14 | 1.778 | 100% |
| Example 26 | 0.60 | 2.50 | / | 0.283 | 4.626 | 16.361 | 100% |
| Comparative Example 1 | 0.55 | 2.50 | 0.98 | 0.238 | 4.671 | 19.661 | 40% |
| Comparative Example 2 | 0.50 | 2.50 | 1.00 | 0.196 | 4.712 | 24.000 | 30% |
| Comparative Example 3 | 2.40 | 2.50 | 0.05 | 4.524 | 0.385 | 0.086 | 0 |
| Comparative Example 4 | 2.40 | 3.00 | 0.80 | 4.524 | 2.545 | 0.563 | 0 |
| Comparative Example 5 | 2.40 | 3.80 | 1.70 | 4.524 | 6.817 | 1.507 | 0 |

| | | | | | | | |
|---|---|---|---|---|---|---|---|
| Note: "/" in Table 1 indicates that a corresponding preparation parameter, material or performance parameter does not exist. | | | | | | | |

It can be learned from Comparative Examples 1 to 2 that when the ratio $\frac{A}{B}$ of the bonding area A between the cover sheet 22 and the shell 1 to the cross-sectional area B of the through-hole covered by the cover sheet 22 is greater than 16.361, the pressure relief pass rate of the battery cell 10 is lower than 60%. This means that the cover sheet 22 cannot fall off in a timely manner to form a pressure relief passage when the internal pressure of the battery cell 10 reaches a preset value, which is not conducive to releasing the internal pressure of the battery cell 10, and the pressure relief of the battery cell 10 is unreliable. It can be learned from Comparative Examples 3 to 4 that when the ratio $\frac{A}{B}$ of the bonding area A between the cover sheet 22 and the shell 1 to the cross-sectional area B of the through-hole covered by the cover sheet 22 is less than 1.778, the battery cell 10 cannot relieve pressure under pressure relief conditions. This is because when the ratio $\frac{A}{B}$ of the bonding area A between the cover sheet 22 and the shell 1 to the cross-sectional area B of the through-hole covered by the cover sheet 22 is less than 1.778, the cover sheet 22 falls off before the temperature of the battery cell 10 reaches 130°C, and the battery cell 10 cannot achieve thermal runaway pressure relief under the preset pressure relief condition (temperature 130°C).

As shown in FIGs. 9 and 10, some embodiments of this application further provide a pressure relief mechanism 2 for a battery cell 10. The pressure relief mechanism 2 includes a cover sheet 22, an adhesive film 21, and an adapting member 12; the adapting member 12 is provided with a second through-hole 121; the second through-hole 121 is configured to connect to the interior of the shell 1 of the battery cell 10; the cover sheet 22 is bonded to the adapting member 12 via the adhesive film 21 and covers the second through-hole 121; and the adhesive film 21 is capable of melting under heat to cause the cover sheet 22 to fall off to form a pressure relief passage connecting the interior and exterior of the shell 1. A bonding area between the cover sheet 22 and the adapting member 12 is F, a cross-sectional area of the second through-hole covered by the cover sheet 22 is G, and $1.778 \leq \frac{F}{G} \leq 16.361$.

Since the bonding force between the cover sheet 22 and the adapting member 12 is proportional to the bonding area F between the cover sheet 22 and the adapting member 12, and the pressure exerted on the cover sheet 22 by the pressure relief substance inside the shell 1 through the second through-hole is proportional to the cross-sectional area G of the second through-hole covered by the cover sheet 22, when the pressure exerted on the cover sheet 22 by the pressure relief substance inside the shell 1 exceeds the bonding force between the cover sheet 22 and the adapting member 12, the cover sheet 22 falls off from the second through-hole 121. By setting a ratio of the bonding area F between the cover sheet 22 and the adapting member 12 to the cross-sectional area G of the second through-hole covered by the cover sheet 22 within a reasonable range, when the internal pressure of the battery cell 10 reaches a preset value, the pressure exerted on the cover sheet 22 by the pressure relief substance inside the shell 1 can exceed the bonding force between the cover sheet 22 and the adapting member 12, allowing the cover sheet 22 to fall off in a timely manner to form a pressure relief passage, thereby timely releasing the internal pressure of the battery cell 10, so that the pressure relief mechanism 2 of the battery cell 10 can exhibit good reliability while achieving overheating pressure relief.

Some embodiments of this application further provide a battery cell 10, where the battery cell 10 includes the battery cell casing provided by the above technical solutions. Since the battery cell includes the battery cell casing provided by the above technical solutions, the pressure relief of the battery cell exhibits good reliability.

Some embodiments of this application further provide an electrical apparatus, where the electrical apparatus includes the battery cell 10 provided by the above technical solutions; and the battery cell 10 is configured to provide electrical energy. Since the electrical apparatus includes the battery cell 10 provided by the above technical solutions, the battery of the electrical apparatus is less prone to thermal runaway and exhibits good reliability.

Although this application has been described with reference to the preferred embodiments, various modifications to this application and replacements of these components therein with equivalents can be made without departing from the scope of this application. In particular, as long as there is no structural conflict, the various technical features mentioned in these embodiments can be combined in any manner. This application is not limited to the specific embodiments disclosed in this specification, but includes all technical solutions falling within the scope of the claims.

## Claims

1. A battery cell casing, comprising:
a shell provided with a through-hole; and
a pressure relief mechanism disposed at the through-hole, wherein the pressure relief mechanism comprises an adhesive film and a cover sheet, the cover sheet is bonded to the shell via the adhesive film and covers the through-hole, and the adhesive film is capable of melting under heat to form a pressure relief passage connecting the interior and exterior of the shell; wherein
a bonding area between the cover sheet and the shell is A, a cross-sectional area of the through-hole covered by the cover sheet is B, and $1.778 \leq \frac{A}{B} \leq 16.361$.

2. The battery cell casing according to claim 1, wherein the shell comprises a side wall, the through-hole comprises a first through-hole provided on the side wall, and the cover sheet is bonded to the side wall via the adhesive film and covers the first through-hole.

3. The battery cell casing according to claim 2, wherein the shell further comprises an adapting member provided on an outer side of the side wall, the through-hole further comprises a second through-hole provided on the adapting member, the second through-hole is in communication with the first through-hole, and the cover sheet is bonded to a side of the adapting member away from the side wall via the adhesive film and covers the second through-hole.

4. The battery cell casing according to claim 3, wherein along an axial direction of the second through-hole, a projection of the second through-hole is located within a projection range of the first through-hole.

5. The battery cell casing according to claim 3, wherein a first direction is perpendicular to a second direction, and both the first direction and the second direction are perpendicular to an axial direction of the first through-hole; a length of the first through-hole in the first direction is greater than a length of the first through-hole in the second direction; and/or a length of the second through-hole in the first direction is greater than a length of the second through-hole in the second direction.

6. The battery cell casing according to claim 5, wherein a length of the side wall in the first direction is D, a length of the side wall in the second direction is E, 10 mm ≤ D ≤ 100 mm, and 1 mm ≤ E ≤ 20 mm.

7. The battery cell casing according to claim 5, wherein the length of the first through-hole in the second direction is L1, and 1 mm ≤ L1 ≤ 6 mm; the length of the second through-hole in the second direction is L2, and 0.2 mm ≤ L2 ≤ 5 mm; and/or the length of the first through-hole in the first direction is L3, and 1 mm ≤ L3 ≤ 6 mm; and the length of the second through-hole in the first direction is L4, and 0.2 mm ≤ L4 ≤ 5 mm.

8. The battery cell casing according to claim 5, wherein the first through-hole is configured as a runway-shaped hole, and/or the second through-hole is configured as a runway-shaped hole.

9. The battery cell casing according to claim 5, wherein a projection of a bonding region between the cover sheet and the adapting member along the axial direction of the first through-hole is a first projection, a width of the first projection in a radial direction of the first through-hole is C, and 0.6 mm ≤ C ≤ 0.95 mm.

10. The battery cell casing according to any one of claims 1 to 9, wherein $2.968 \leq \frac{A}{B} \leq 8.776$ .

11. The battery cell casing according to any one of claims 1 to 9, wherein 0.28 mm² ≤ B ≤ 4.524 mm².

12. The battery cell casing according to any one of claims 1 to 9, wherein 3.581 mm² ≤ A ≤ 8.042 mm².

13. The battery cell casing according to claim 1, wherein a melting point of the adhesive film is T1, and 110°C ≤ T1 ≤ 130°C.

14. The battery cell casing according to claim 1, wherein the adhesive film comprises a first sub-film and a second sub-film that are stacked along an axial direction of the through-hole, the first sub-film is located between the second sub-film and the cover sheet, and a melting point of the second sub-film is lower than a melting point of the first sub-film.

15. The battery cell casing according to claim 14, wherein the melting point of the second sub-film is T2, and 100°C ≤ T2 ≤ 120°C.

16. The battery cell casing according to claim 14, wherein the adhesive film further comprises a third sub-film located between the first sub-film and the second sub-film, and a melting point of the third sub-film is higher than the melting point of the first sub-film and the melting point of the second sub-film.

17. The battery cell casing according to claim 16, wherein the melting point of the third sub-film is T3, and 130°C ≤ T3 ≤ 150°C.

18. The battery cell casing according to any one of claims 1 to 9, wherein the adhesive film comprises polypropylene.

19. The battery cell casing according to any one of claims 1 to 9, wherein a thickness of the adhesive film in an axial direction of the through-hole is H, and 10 µm ≤ H ≤ 48 µm.

20. The battery cell casing according to any one of claims 1 to 9, wherein a bonding strength of the adhesive film is P, and $0.08 MPa \leq \frac{A}{B} ⋅ P \leq 2 MPa$.

21. The battery cell casing according to any one of claims 1 to 9, wherein the through-hole is a liquid injection hole.

22. A pressure relief mechanism for a battery cell, wherein the pressure relief mechanism comprises a cover sheet, an adhesive film, and an adapting member, the adapting member is provided with a second through-hole, the second through-hole is configured to be in communication with an interior of a shell of the battery cell, the cover sheet is bonded to the adapting member via the adhesive film and covers the second through-hole, and the adhesive film is capable of melting under heat to form a pressure relief passage connecting the interior and exterior of the shell; and a bonding area between the cover sheet and the adapting member is F, a cross-sectional area of the second through-hole covered by the cover sheet is G, and $1.778 \leq \frac{F}{G} \leq 16.361$.

23. A battery cell, comprising the battery cell casing according to any one of claims 1 to 21.

24. An electrical apparatus, comprising the battery cell according to claim 23, wherein the battery cell is configured to provide electrical energy.
